# EUROPÄISCHE PATENTSCHRIFT

(11) **EP 1 216 891 B1**
(45) Veröffentlichungstag und Bekanntmachung des Hinweises auf die Patenterteilung: **20.04.2005**
(21) Anmeldenummer: 01125472.9
(22) Anmeldetag: 06.11.2001
(51) Int. Cl.: B60R 21/04

(54) **Energieabsorbierendes Deformationselement**
Energy absorbing deformation element
Elément de déformation absorbeur d'énergie

(30) Priorität: 19.12.2000 DE 10063339
(43) Veröffentlichungstag der Anmeldung: 26.06.2002
(73) Patentinhaber: Dr.Ing. h.c.F. Porsche Aktiengesellschaft, 70435 Stuttgart (DE)
(72) Erfinder: Benkler, Olaf, 75242 Neuhausen/Hamberg (DE)

(56) Entgegenhaltungen:
- EP-A- 0 753 432
- US-A- 6 082 792
- "CAMRY'S GRACI'OUS TECHNOLOGY" AUTOMOTIVE ENGINEERING, SOCIETY OF AUTOMOTIVE ENGINEERS. WARRENDALE, US, Bd. 105, Nr. 2, 1. Februar 1997 (1997-02-01), Seite 22,24,26 XP000682312 ISSN: 0098-2571
- "IMPROVING HEAD-IMPACT PROTECTION" AUTOMOTIVE ENGINEERING, SOCIETY OF AUTOMOTIVE ENGINEERS. WARRENDALE, US, Bd. 104, Nr. 5, 1. Mai 1996 (1996-05-01), Seiten 49-53, XP000591331 ISSN: 0098-2571

## Beschreibung

Die Erfindung bezieht sich auf ein energieabsorbierenes Deformationselement nach dem Oberbegriff des Anspruchs 1.

Aus der gattungsbildenden DE 195 05 935 A1 ist eine Struktur zum Absorbieren einer Aufprallenergie bekannt, die aus einem gitterförmigen Element besteht, das durchgehende Längsrippen umfaßt, zwischen denen Querstege angeordnet sind, wobei die Querrippen und die Längsrippen gegenüber dem Rohbau und der Innenverkleidung geneigt sind.

Aufgabe der Erfindung ist es, ein energieabsorbierendes Deformationselement in Säulen, Trägern und dgl. in einer Aufbaustruktur für Kraftfahrzeuge zu schaffen, das einfach herstellbar und optimal den Gegebenheiten in Trägern, Säulen und einem Fahrzeughimmel anpaßbar und mit dieseFahrzeugteilen verbindbar ist und eine definierte Energieabsorption insbesondere bei einem Kopfaufprall gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß das Deformationselement eine einfach herzustellende Gitterstruktur aus aneinandergereihten U-Profilen umfaßt, die entsprechend den Gegebenheiten in ihrer Dimensionierung anpaßbar sind. Die einzelnen Profile sind nur durch Verbindungsstege zu einem länglichen Element miteinander verbunden. Auch sind die Deformationselemente mit den Fahrzeugsäulen und/oder der Fahrzeugstruktur oder an einem starren Fahrzeughimmel in einfacher Weise über den oder die Stege des U-Profils befestigbar.

Das Deformationselement besteht aus beabstandet zueinander angeordneten U-Profilen mit einem Steg und zwischen Schenkeln der Profile quergerichtet angeordneten Versteifungsstegen, wobei die Profile über mindestens einen Verbindungssteg zu einer langgestreckten, zumindest in einer Ebene angeordneten Baueinheit verbunden ist, die eine beliebige Konfiguration aufweisen kann. Die Deformationselemente bestehen vorzugsweise aus einem Kunststoff.

Bei der Verwendung des Deformationselements in einer Fahrzeugsäule sind die Stege der U-Profile vorzugsweise der Innenwandung der Fahrzeugsäule und die Stege der Innenraumverkleidung bzw. der Säulenverkleidung zugerichtet. Dagegen sind die Stege des U-Profils des Deformationselements bei Verbindung mit dem Fahrzeughimmel mit diesem verbunden und die Schenkel dem Rohbau zugewandt.

Die Energiebsorbtion ist in beiden Fällen so definiert, daß die gestellten Anforderungen zur Energieabsorbtion bei einem Kopfaufprall erfüllt sind.

Die Schenkel der Profile können in Längsrichtung des Profils gesehen eine unterschiedliche Höhe aufweisen. Auch können die Höhen der Schenkel dem Formverlauf des Rohbauelements folgend ausgeführt sein, und die Außenflächen der Profilstege weisen eine stetig fortlaufende unterbrochene Fläche auf. Hierdurch ist in vorteilhafter Weise eine Anpassung des Deformationselements an die Fahrzeugstruktur, d.h. an die Fahrzeugsäule bzw. an das Fahrzeugdach in optimaler Weise gewährleistet.

Zur Versteifung der U-Profile sind diese über Versteifungsstege miteinander verbunden, wobei im Profil zwischen den Schenkeln mindestens ein Versteifungssteg vorgesehen ist, der auch endseitig des Profils angeordnet sein kann. Die Stege sowie die U-Profile weisen eine geringe Wandstärke auf, so daß ein Umbiegen möglich wird.

In vorteilhafter Weise sind die U-Profile in Einbaulage quer zur Fahrzeugsäule übereinander annähernd in einer Ebene liegend angeordnet und bilden zwei zueinander beabstandete Stränge nach Art eines U, die über ein durchgehendes Profilelement am oberen Ende miteinander verbunden sind. Hierdurch wird ein Deformationselement geschaffen, das an eine Trägerstruktur wie beispielsweise an eine Fahrzeugsäule anpaßbar ist, d.h. den eigentlichen U-Profilen des Deformationselements stehen Flächen des Säulenprofils gegenüber, wobei ein Hohlraum des Säulenprofils frei von den Deformationselementen ist.

Die Verwendung des Deformationselements kann an vertikal angeordneten Säulen des Fahrzeugaufbaus und/oder im Bereich des Himmels bzw. eines Dachquerträgers vorgesehen werden.

Bei der Anordnung an einer Fahrzeugsäule ist das Deformationselement über mindestens einen Steg, welcher der Innenfläche der Säule zugerichtet ist, verbunden, wobei die Innenverkleidung der Säule den Schenkeln des Profils gegenüberstehen. Bei der Verwendung des Deformationselements am Fahrzeugdach ist es mit dem starren Fahrzeughimmel verbunden, wobei sich ein Mittelteil des Deformationselements dann quer zum Fahrzeug und ein weiteres Teil des Deformationselements in Längsrichtung des Fahrzeugs erstreckt.

Das an der Säule vorgesehene Deformationselement weist am oberen freien Ende ein längliches, einteiliges, U-förmiges Profil als Deformationselement auf, das gleichzeitig als Rampenteil mit einer Schrägfläche für einen Kopfairbag ausgeführt ist. Die Rampenfläche dient in vorteilhafter Weise dazu, den Kopfairbag in entsprechender Richtung bei einem Crash dem Kopf eines Insassens zuzuleiten.

Ausführungsbeispiele der Erfindung sind in den Zeichnungen dargestellt und werden im folgenden näher beschrieben.
Es zeigen
- Fig. 1: eine schaubildliche Darstellung eines Deformationselements mit Rampenteil für einen Kopfairbag,
- Fig. 2: einen Horizontalschnitt durch das Deformationselement nach der Linie II-II der Fig. 1,
- Fig. 3: einen Vertikalschnitt durch das Deformationselement nach der Linie III-III der Fig. 1,
- Fig. 4: einen Vertikalschnitt durch das Deformationselement nach der Linie IV-IV der Fig. 1,
- Fig. 5: einen Vertikalschnitt durch das Deformationselement nach der Linie V-V der Fig. 1,
- Fig. 6: eine schaubildliche Darstellung des an einer Säule angeordneten Deformationselements mit Rampenteil,
- Fig. 7: eine schaubildliche Darstellung des Deformationselements zwischen Fahrzeughimmel und Querträger der Aufbaustruktur,
- Fig. 8: das Deformationselement nach Fig. 7 in schaubildlicher Darstellung,

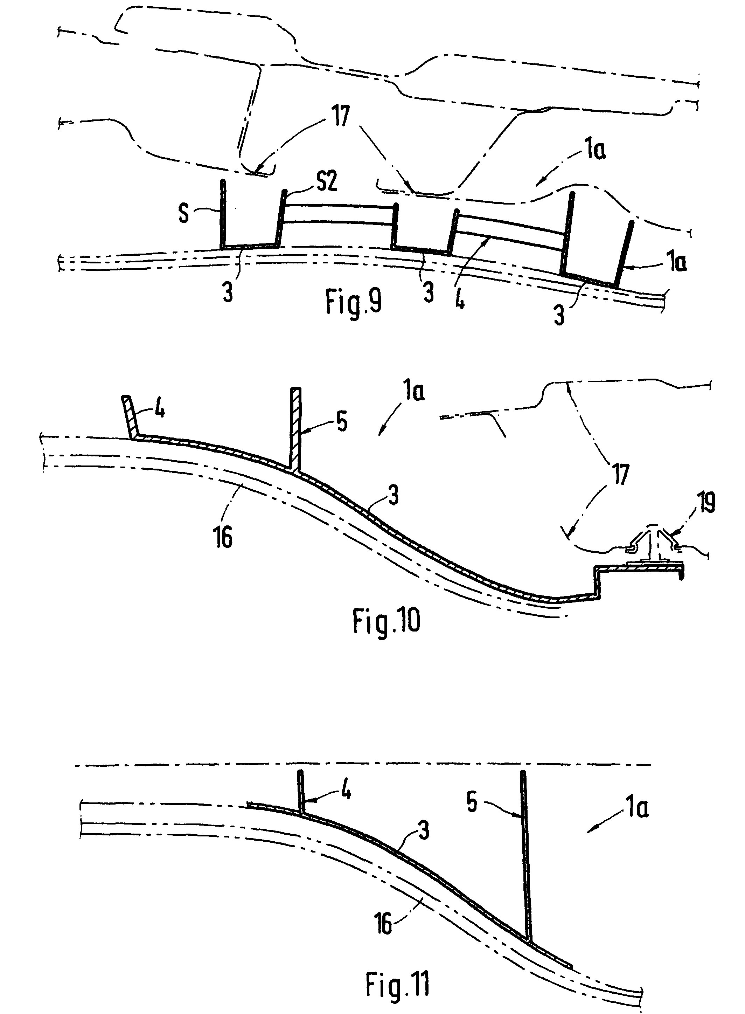

- Fig. 9: einen Vertikalschnitt durch das Deformationselement nach der Linie IX-IX der Fig. 8,
- Fig. 10: einen Vertikalschnitt durch das Deformationselement nach der Linie X-X der Fig. 8 und
- Fig. 11: einen Vertikalschnitt durch das Deformationselement nach der Linie XI-XI der Fig. 8.

Im Fahrzeug sind zur Energieabsorbtion bei einem Kopfaufprall sogenannte Deformationselemente 1; 1a in Form von gitterartigen Elementen in zum Kopf eines Fahrzeuginsassen benachbarten Bereichen der Fahrzeugstruktur, wie beispielsweise an Fahrzeugsäulen, in Trägern oder dgl. angeordnet.

Das Deformationselement 1; 1a umfaßt eine Vielzahl von U-Profilen 2 bzw.
U-profilförmigen Elementen mit einem Steg 3 und diesen begrenzende Schenkel S1, S2. Die Profile 2 sind über längsgerichtete Verbindungsstege 4 und/oder 5 miteinander zu einer Baueinheit verbunden. Zwischen den Schenkeln S1, S2 der Profile 2 können ein oder mehrere Versteifungsstege 6, 6a angeordnet sein. Diese Versteifungsstege 6, 6a sind entweder endseitig des Profils 2 als Versteifungsstege 6a oder als Versteifungsstege 6 in einem Bereich zwischen den beiden Schenkeln des Profils 2 vorgesehen.

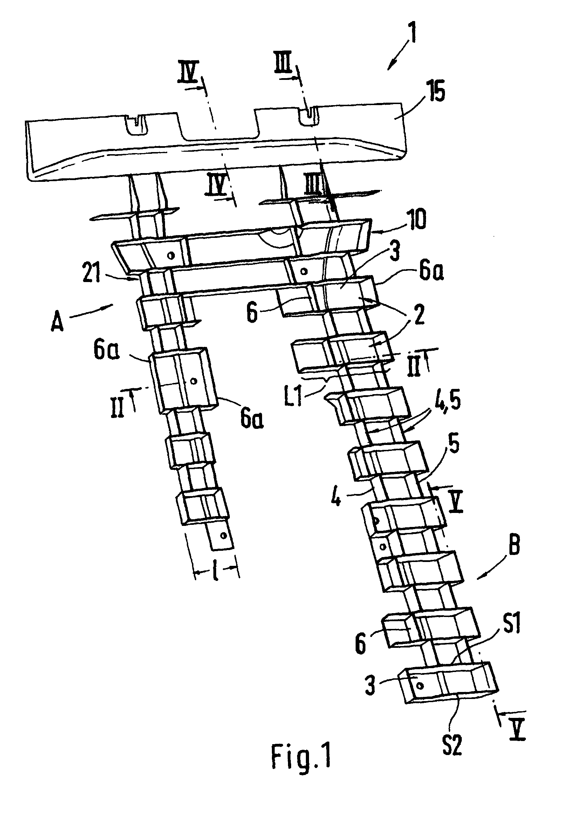

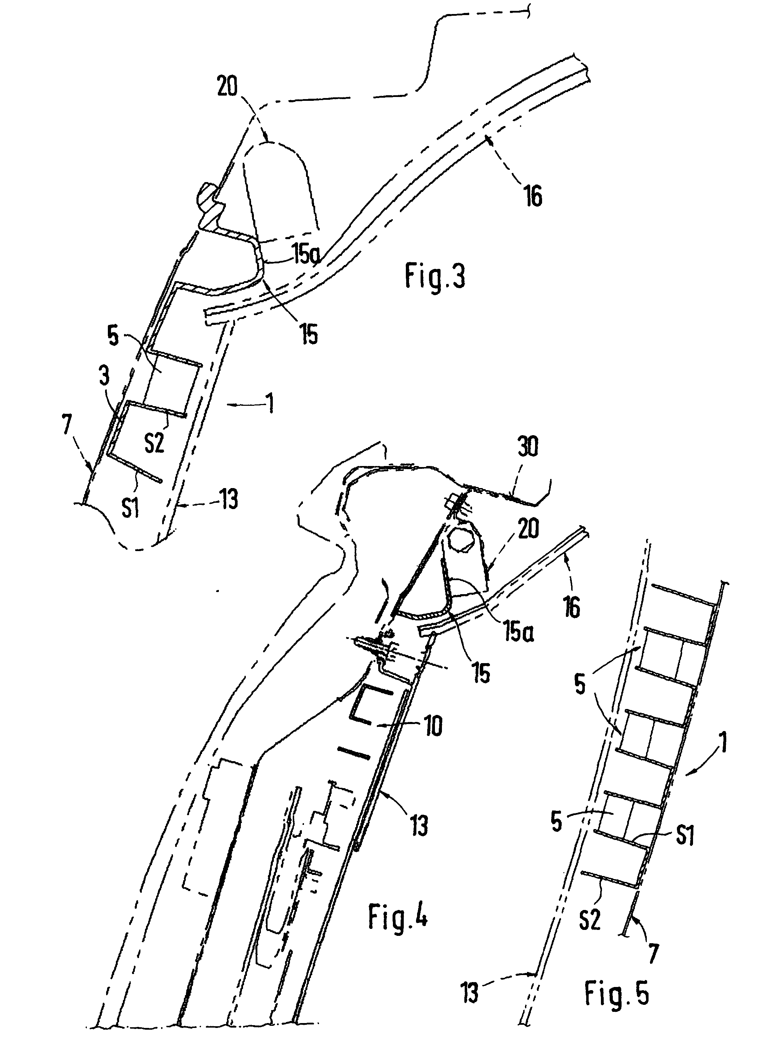

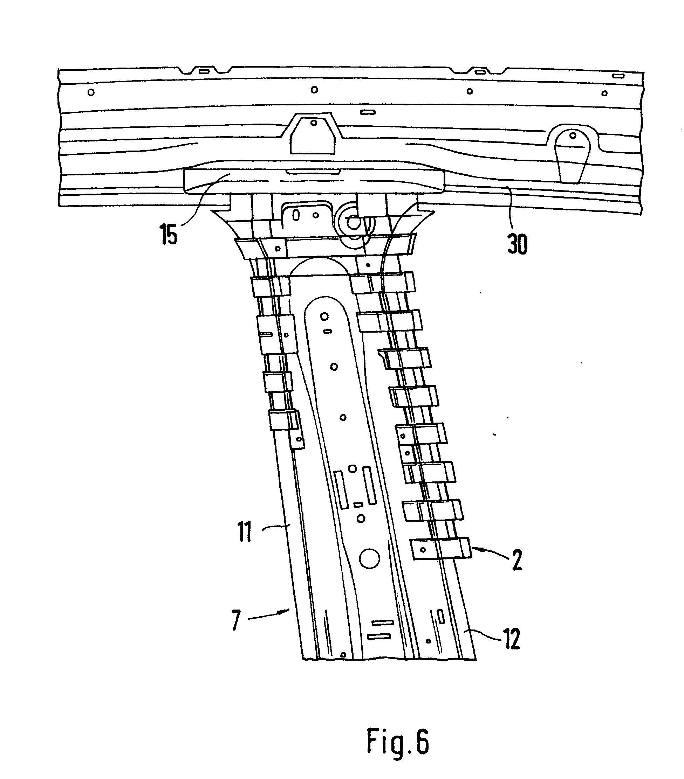

Wie in den Figuren 1 und 6 an einem Beispiel an einer Fahrzeugsäule 7 näher dargestellt ist, sind die U-Profile 2 des Deformationselements 1 in Einbaulage quer zur Fahrzeugsäule 7 verlaufend übereinander und annähernd in einer Ebene angeordnet. Die Verbindung der U-Profile 2 erfolgt mittels der Verbindungsstege 4, 5, wobei ein, zwei oder mehrere Verbindungsstege verwendet werden können. Die Verbindungsstege 4, 5 sind zueinander benachbart angeordnet.

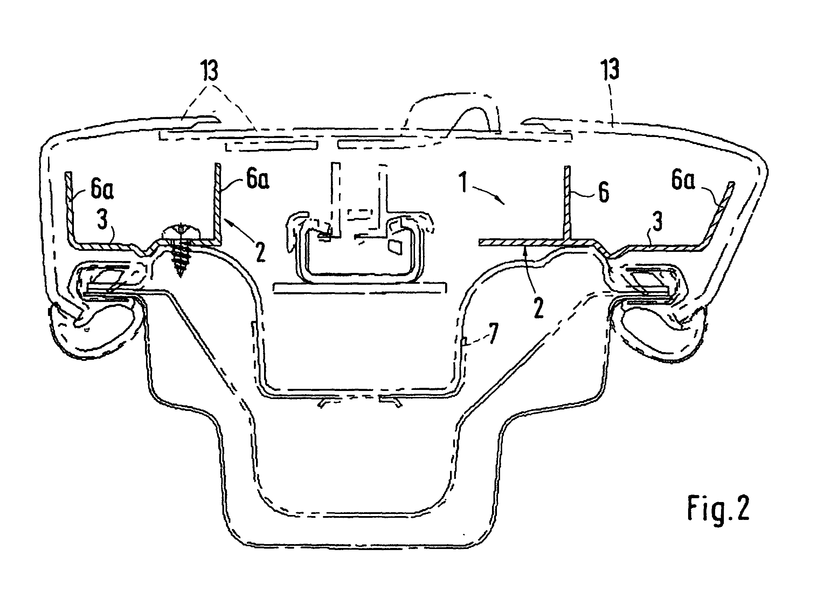

Das Deformationselement 1 in der Fahrzeugsäule besteht im wesentlichen aus zwei sogenannten Strängen A und B, die ein U bilden, wobei der obere Abschluß des Deformationselements 1 aus einem durchgehenden U-Profil 10 bestehen kann. Die Stränge A und B sind jeweils auf einer Abstellung 11, 12 eines Trägerprofils der Säule 7 angeordnet und mit diesen verbunden. Die Stege 3 des Profils sind den Abstellungen 11, 12 zugerichtet und stützen sich an diesen ab. Die Schenkel S1, S2 sind dagegen beabstandet zu einer Innenverkleidung 13 angeordnet, wie in Fig. 2 näher gezeigt ist. Die Schenkel S1 und S2 können verschiedene Höhen aufweisen, was von den Einbaugegebenheiten abhängig ist. Aufgrund der Befestigung der U-Profile 2 mit dem Trägerprofil der Säule 7 sind die Stege 3 der Profile 2 etwa in einer gemeinsamen Ebene angeordnet.

Wie in Fig. 1 näher gezeigt, können die U-Profile 2 eine unterschiedliche Länge I, I1 aufweisen. Desweiteren können die Versteifungsstege 6 örtlich verschieden im Profil 2 angeordnet sein, d. h. sie sind nicht in einer gemeinsamen Ebene angeordnet. So sind die Versteifungsstege 6a beispielsweise endseitig des Profils 2 vorgesehen und bilden mit dem U-Profil ein offenes kastenförmiges Element.

Ebenfalls können die Verbindungsstege 4, 5 zwischen den Profilen 2 beispielsweise versetzt von Profil zu Profil angeordnet sein. In den Zeichnungen sind die Verbindungsstege 4, 5 jeweils auf einer Linie ausgerichtet.

Nach einer weiteren Ausführung gemäß Fig. 3 kann der obere Abschluß des Deformationselements 1 von einem Rampenteil 15 mit einer Schrägfläche 15a gebildet sein. Die Schrägfläche 15a des Rampenteils 15 gibt eine Richtung für einen Kopfairbag vor, damit dieser in eine optimierte Position zum Kopf eines Insassens geführt werden kann. Dieses Rampenteil 1a ist integrierter Bestandteil des Deformationselements 1 und dient gleichzeitig zur Energieaufnahme bei einem Kopfaufprall.

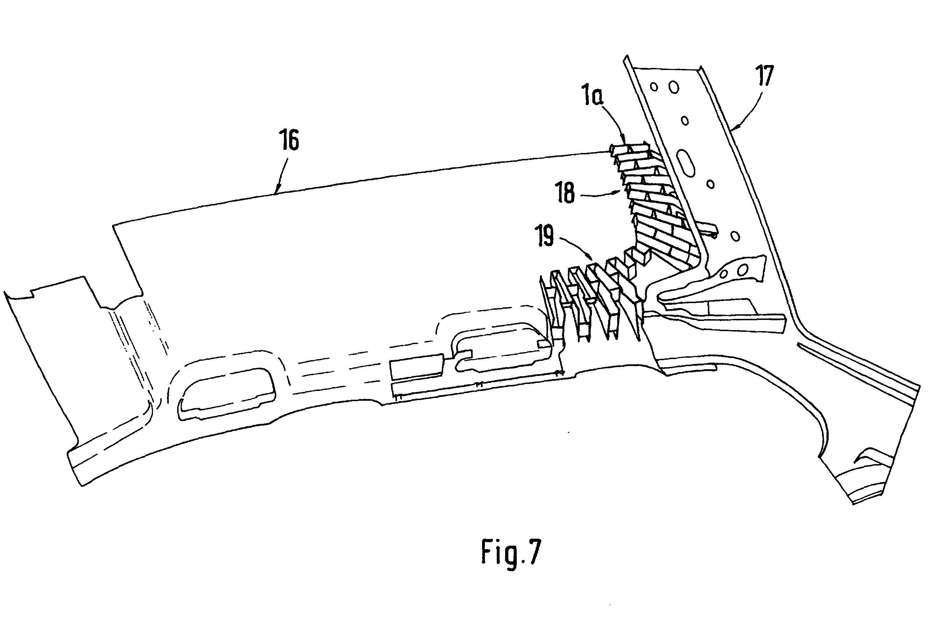

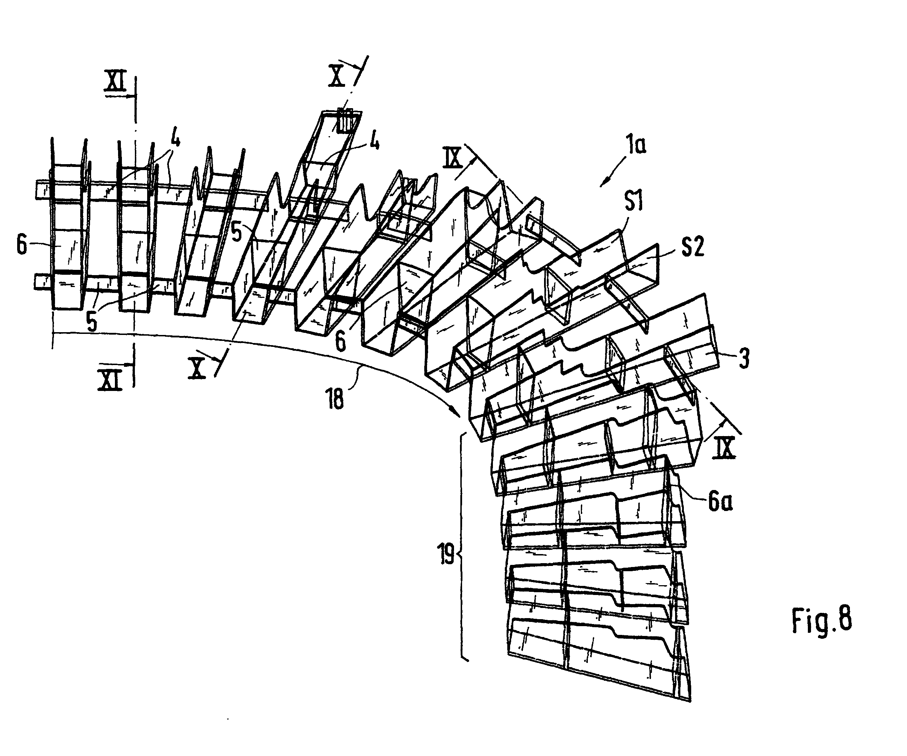

Das Deformationselement 1a gemäß der Fig. 7 und 8 ist auch im Dachbereich des Fahrzeugs angeordnet, wobei der Aufbau dem Deformationselement 1 für die Säule 7 entspricht. Die Profile 2 werden mit ihren Stegen 3 am starren Dachhimmel 16 befestigt, wobei die Schenkel S1 und S2 dem Träger 17 des Fahrzeugaufbaus zugerichtet sind. Der Träger 17 stellt einen Dachquerträger dar, der endseitig mit Fahrzeugsäulen verbunden ist. Das Deformationselement 1a erstreckt sich mit einem ersten Bereich 18 quer zum Fahrzeug über die gesamte Dachbreite. Ein zu diesen abgewinkelter zweiter Bereich 19 erstreckt sich in Fahrzeuglängsrichtung. Das Deformationselement 1a ist zwischen dem starren Dachhimmel 16 und dem Träger 17 angeordnet, wobei der Himmel 16 mit der Trägerstruktur über Clipse 19 oder dgl. verbindbar ist.

## Patentansprüche

1. Energieabsorbierendes Deformationselement in Säulen, Trägern und dergleichen für Kraftfahrzeuge, das in einer Aufbaustruktur zwischen einem Rohbauelement und einer Innenraumverkleidung anordbar ist und aus einem gitterartigen Element besteht, **dadurch gekennzeichnet, daß** das Deformationselement (1; 1a) aus beabstandet zueinander angeordneten U-Profilen (2) mit einem Steg (3) und zwischen Schenkeln (S1, S2) der Profile (2) quergerichtet angeordneten Versteifungsstegen (6, 6a) besteht und die Profile (2) über Verbindungsstege (4, 5) zu einer langgestreckten, zumindestens in einer Ebene angeordneten Baueinheit verbunden sind.

2. Deformationselement nach Anspruch 1, **dadurch gekennzeichnet, daß** die Stege (3) der U-Profile (2) in Einbaulage bei Verbindung mit der Fahrzeugsäule (7) dem Rohbauelement zugerichtet sind, wobei die Schenkel (S1, S2) der Innenraumverkleidung (13) gegenüberstehen.

3. Deformationselement nach Anspruch 1, **dadurch gekennzeichnet, daß** die Stege (3) der U-Profile (2) in Einbaulage mit einem starren Fahrzeughimmel (16) verbunden und die Schenkel (S1, S2) einem Träger (17) zugerichtet sind.

4. Deformationselement nach den Ansprüchen 1, 2 oder 3, **dadurch gekennzeichnet, daß** die Schenkel (S1, S2) der U-Profile (2) in Längsrichtung der Profile (2) gesehen eine unterschiedliche Höhe aufweisen.

5. Deformationselement nach den Ansprüchen 1 oder 4, **dadurch gekennzeichnet, daß** die Höhen der Schenkel (S1, S2) der Profile (2) dem Formverlauf des Rohbauelements folgend ausgeführt sind und die Außenflächen der Profilstege (3) eine stetig fortlaufende unterbrochene Fläche bilden.

6. Deformationselement nach einem oder mehreren der vorhergehenden Ansprüche, **dadurch gekennzeichnet, daß** die Schenkel (S1, S2) der U-Profil (2) divergierend ausgeführt sind.

7. Deformationselement nach einem oder mehreren der vorhergehenden Ansprüche, **dadurch gekennzeichnet, daß** benachbarte U-Profile (2) mindestens zwei Verbindungsstege (4, 5) aufweisen, zwischen denen mindestens ein Versteifungssteg (6, 6a) innerhalb des Profils vorgesehen ist.

8. Deformationselement nach einem oder mehreren der vorhergehenden Ansprüche, **dadurch gekennzeichnet, daß** das Element (1a) in Einbaulage mit dem starren Fahrzeughimmel (16) verbunden ist und sich mit einem Mittenteil (Bereich 18) quer zum Fahrzeug sowie mit einem weiteren abgewinkelten seitelichen Teil (Bereich 19) in Längsrichtung des Fahrzeugs erstreckt.

9. Deformationselement nach den Ansprüchen 1 oder 8, **dadurch gekennzeichnet, daß** das Element (1a) in Einbaulage mitsamt dem starren Fahrzeughimmel (16) über Halteclipse (19) am Fahrzeugrohbau befestigbar ist.

10. Deformationselement nach einem oder mehreren der vorhergehenden Ansprüche, **dadurch gekennzeichnet, daß** das Element (1) in Einbaulage an der Fahrzeugsäule (7) angeordnet ist und mit dieser über mindestens einen der Stege (3), welcher der Innenfläche der Säule (7) zugerichtet ist, verbunden wird, wobei die Innenverkleidung (13) der Säule (7) den Schenkeln (S1, S2) des Profils (2) gegenüberstehen.

11. Deformationselement nach einem oder mehreren der vorhergehenden Ansprüche, **dadurch gekennzeichnet, daß** die Stirnkanten der Profilschenkel (S1, S2) in Einbaulage mit einem Abstand zur Innenverkleidung (13) der Fahrzeugsäule (7) angeordnet sind.

12. Deformationselement nach Anspruch 1, **dadurch gekennzeichnet, daß** die U-Profile (2) in Einbaulage quergerichtet zur Fahrzeugsäule (7) angeordnet und die Verbindungsstege (4, 5) längsverlaufend ausgeführt sind.

13. Deformationselement nach Anspruch 1, **dadurch gekennzeichnet, daß** am oberen freien Ende des Deformationselements (1) ein längliches einteiliges U-förmiges Profil (15) als Deformationselement angeordnet ist, das ein unter einem Winkel schräg zum Innenraum des Fahrzeugs ausgerichtetes Rampenteil (15) mit einer Schrägfläche (15a) für einen Kopfairbag (20) aufweist, der im seitlichen Dachrahmen (30) angeordnet ist.

14. Deformationselement nach einem oder mehreren der vorhergehenden Ansprüche, **dadurch gekennzeichnet, daß** die Versteifungsstege (6a) endseitig der Profile (2) zwischen den Schenkeln (S1, S2) angeordnet sind und sich ein offenes kastenförmiges Element ausbildet.

15. Deformationselement nach einem oder mehreren der vorhergehenden Ansprüche, **dadurch gekennzeichnet, daß** die U-Profile (2) in Einbaulage quer zur Fahrzeugsäule (7) übereinander annähernd in einer Ebene liegend angeordnet sind und die Profile (2) zwei zueinander beabstandete Stränge (A, B) nach Art eines U bilden, die mindestens über ein durchgehendes Profilelement (10) am oberen freien Ende (21) miteinander verbunden sind.

## Claims

1. An energy-absorbing deformation member in pillars, beams and the like for motor vehicles, said deformation member being arrangeable in a body structure between a bodyshell component and an interior panel and comprising a lattice-type component, **characterised in that** the deformation member (1; 1a) comprises mutually spaced U-sections (2) having a web (3) and stiffening webs (6, 6a) arranged transversely between arms (S1, S2) of the sections (2), and the sections (2) are connected by connecting webs (4, 5) to form an elongate structural unit arranged in at least one plane.

2. A deformation member according to claim 1, **characterised in that**, in the installed position, on connection to the vehicle pillar (7), the webs (3) of the U-sections (2) face the bodyshell component, while the arms (S1, S2) are arranged opposite the interior panel (13).

3. A deformation member according to claim 1, **characterised in that**, in the installed position, the webs (3) of the U-sections (2) are connected to a rigid vehicle roof lining (16) and the arms (S1, S2) face a beam (17).

4. A deformation member according to claim 1, 2 or 3, **characterised in that** the arms (S1, S2) of the U-sections (2) have varying heights when viewed in the longitudinal direction of the sections (2).

5. A deformation member according to claim 1 or 4, **characterised in that** the heights of the arms (S1, S2) of the sections (2) are selected so as to follow the shape of the bodyshell component, and the outer surfaces of the section webs (3) form a progressively extending, discontinuous surface.

6. A deformation member according to one or more of the preceding claims, **characterised in that** the arms (S1, S2) of the U-section (2) are divergently formed.

7. A deformation member according to one or more of the preceding claims, **characterised in that** adjacent U-sections (2) have at least two connecting webs (4, 5), between which is provided at least one stiffening web (6, 6a) within the section.

8. A deformation member according to one or more of the preceding claims, **characterised in that**, in the installed position, the member (1a) is connected to the rigid vehicle roof lining (16) and has a middle part (region 18) extending transversely to the vehicle and a further, angled, side part (region 19) extending in the longitudinal direction of the vehicle.

9. A deformation member according to claim 1 or 8, **characterised in that**, in the installed position, the member (1a) is fixable, together with the rigid vehicle roof lining (16), to the vehicle bodyshell by retaining clips (19).

10. A deformation member according to one or more of the preceding claims, **characterised in that**, in the installed position, the member (1) is arranged on the vehicle pillar (7) and is connected thereto by at least one of the webs (3) facing the inner surface of the pillar (7), while the interior panel (13) of the pillar (7) is arranged opposite the arms (S1, S2) of the section (2).

11. A deformation member according to one or more of the preceding claims, **characterised in that**, in the installed position, the front edges of the section arms (S1, S2) are arranged spaced apart from the interior panel (13) of the vehicle pillar (7).

12. A deformation member according to claim 1, **characterised in that**, in the installed position, the U-sections (2) are arranged transversely to the vehicle pillar (7), and the connecting webs (4, 5) extend longitudinally.

13. A deformation member according to claim 1, **characterised in that** an elongate, one-piece, U-shaped section (15) acting as a deformation member is arranged at the free upper end of the deformation member (1) and comprises a ramp part (15), arranged at an oblique angle to the interior of the vehicle, with an inclined surface (15a) for a head air bag (20) arranged in the roof side frame (30).

14. A deformation member according to one or more of the preceding claims, **characterised in that** the stiffening webs (6a) are arranged at the end of the sections (2) between the arms (S1, S2), and an open, box-shaped component is formed.

15. A deformation member according to one or more of the preceding claims, **characterised in that**, in the installed position, the U-sections (2) are arranged one above the other transversely to the vehicle pillar (7) so as to lie approximately in one plane, and the sections (2) form two mutually spaced strands (A, B), in the shape of a U, which are connected to one another at their free upper end (21) at least by a continuous sectional component (10).

## Revendications

1. Élément de déformation absorbant l'énergie dans des montants, des supports et des éléments similaires pour des véhicules, qui peut être agencé dans une structure entre un élément de structure brute et un revêtement d'habitacle intérieur et se compose d'un élément similaire à une grille, **caractérisé en ce que** l'élément de déformation (1 ; 1a) se compose de profilés en forme de U (2) disposés à distance les uns des autres avec une ame (3) et des barrettes de renforcement (6, 6a) disposées dans le sens transversal entre des branches (S1, S2) des profilés (2) et les profilés (2) sont reliés au moyen d'entretoises (4, 5) à une unité de construction allongée agencée au moins dans un plan.

2. Élément de déformation selon la revendication 1, **caractérisé en ce que** les ames (3) des profilés en forme de U (2), dans la position de montage, sont dirigés vers l'élément de structure brute en conjonction avec le montant du véhicule (7), les branches (S1, S2) faisant face au revêtement de l'habitacle intérieur (13).

3. Élément de déformation selon la revendication 1, **caractérisé en ce que** les ames (3) des profilés en forme de U (2), dans la position de montage, sont reliés avec une garniture de toit fixe (16), les branches (S1, S2) étant dirigées vers un support (17).

4. Élément de déformation selon les revendications 1, 2 ou 3, **caractérisé en ce que** les branches (S1, S2) des profilés en forme de U (2) présentent une hauteur différente dans la direction longitudinale des profilés (2).

5. Élément de déformation selon les revendications 1 ou 4, **caractérisé en ce que** les hauteurs des branches (S1, S2) des profilés (2) sont réalisées en suivant la forme de l'élément de structure brute et les surfaces extérieures des moulures (3) des profilés forment une surface interrompue continue en permanence.

6. Élément de déformation selon l'une ou plusieurs des revendications précédentes, **caractérisé en ce que** les branches (S1, S2) du profilé en forme de U (2) sont réalisées de façon divergente.

7. Élément de déformation selon l'une ou plusieurs des revendications précédentes, **caractérisé en ce que** des profilés en forme de U (2) adjacents comprennent au moins deux entretoises (4, 5), entre lesquelles au moins une barrette de renforcement (6, 6a) est prévue à l'intérieur du profilé.

8. Élément de déformation selon l'une ou plusieurs des revendications précédentes, **caractérisé en ce que** l'élément (1a), dans la position de montage, est relié avec la garniture de toit fixe (16) et s'étend avec une partie centrale (zone 18) dans le sens transversal du véhicule et avec une autre partie latérale cintrée (zone 19) dans la direction longitudinale du véhicule.

9. Élément de déformation selon les revendications 1 ou 8, **caractérisé en ce que** l'élément (1a), dans la position de montage, peut être fixé avec l'ensemble de la garniture de toit fixe (16) au moyen de clips de retenue (19) sur la structure brute du véhicule.

10. Élément de déformation selon l'une ou plusieurs des revendications précédentes, **caractérisé en ce que** l'élément (1), dans la position de montage, est disposé sur le montant du véhicule (7) et relié à celui-ci au moyen d'au moins l'une des ames (3), qui est dirigée vers la surface intérieure du montant (7), le revêtement intérieur (13) du montant (7) faisant face aux branches (S1, S2) du profilé (2).

11. Élément de déformation selon l'une ou plusieurs des revendications précédentes, **caractérisé en ce que** les arêtes frontales des branches du profilé (S1, S2), dans la position de montage, sont disposées à une distance du revêtement intérieur (13) du montant du véhicule (7).

12. Élément de déformation selon la revendication 1, **caractérisé en ce que** les profilés en forme de U (2), dans la position de montage, sont agencés transversalement au montant du véhicule (7) et les entretoises (4, 5) sont réalisées dans le sens longitudinal.

13. Élément de déformation selon la revendication 1, **caractérisé en ce qu'** un profilé en forme de U allongé d'une seule pièce (15) est disposé, sur l'extrémité libre supérieure de l'élément de déformation (1), en tant qu'élément de déformation, qui présente une partie de rampe (15) orientée dans un angle oblique par rapport à l'habitacle du véhicule avec une surface oblique (15a) pour un coussin gonflable de sécurité de tête (20) qui est agencé dans le châssis de toit latéral (30).

14. Élément de déformation selon l'une ou plusieurs des revendications précédentes, **caractérisé en ce que** les barrettes de renforcement (6a) sont disposées du côté de l'extrémité des profilés (2) entre les branches (S1, S2) et un élément ouvert en forme de caisson est réalisé.

15. Élément de déformation selon l'une ou plusieurs des revendications précédentes, **caractérisé en ce que** les profilés en forme de U (2), dans la position de montage, sont disposés dans le sens transversal du montant du véhicule (7) l'un en chevauchement de l'autre approximativement dans un plan et les profilés (2) forment deux tronçons à distance l'un de l'autre (A, B) à la manière d'un U, qui sont reliés entre eux au moins au moyen d'un élément profilé traversant (10) à l'extrémité libre supérieure (21).
